# EUROPEAN PATENT APPLICATION

(11) **EP 4 848 048 A1**
(43) Date of publication of application: **02.12.2026**
(21) Application number: 26174547.5
(22) Date of filing: 24.04.2026
(51) Int. Cl.: G06F 3/042, B60K 35/10, B60K 35/22, G06F 3/03

(54) **INPUT DEVICE**

(30) Priority: 12.05.2025 JP 2025079483
(71) Applicant: Alps Alpine Co., Ltd., Ota-ku, Tokyo 145-8501 (JP)
(72) Inventor: ICHIKAWA, Teiichi, Tokyo (JP)
(74) Representative: Schmitt-Nilson Schraud Waibel Wohlfrom Patentanwälte Partnerschaft mbB

(57) **Abstract**

An input device includes a light-transmitting member configured to transmit light and a proximity sensor configured to detect proximity of an operation target through the light-transmitting member. The proximity sensor includes a light-emitting element, a light-receiving element, and a partitioning member configured to separate the light-emitting element and the light-receiving element from each other. A reflection suppressing member is arranged in a gap formed between the light-transmitting member and a surface of the partitioning member, the reflection suppressing member being thinner than the gap.

## Description

The present application is based on and claims priority to Japanese Patent Application No. 2025-079483 filed on May 12, 2025.

The present disclosure relates to an input device for receiving user's operation inputs, and more particularly to an input device provided with a touch sensor and a proximity sensor.

In recent years, with the widespread adoption of touch panel displays and gesture-based input, proximity detection devices have frequently been mounted in vehicle-mounted displays. Such an optical proximity detection device irradiates an operation target with infrared light using, for example, an infrared light-emitting diode (LED) and receives light reflected from the operation target using a light-receiving element such as a photodiode, thereby detecting proximity of the operation target (for example, JP2019-74465A (hereinafter "Patent Document 1") and JP2024-45852A (hereinafter "Patent Document 2")).

The present disclosure relates to an input device according to the appended claims. Embodiments are disclosed in the dependent claims. An input device according to an aspect of the present disclosure comprises a light-transmitting member configured to transmit light and a proximity sensor configured to detect proximity of an operation target through the light-transmitting member, wherein the proximity sensor includes a light-emitting element, a light-receiving element, and a partitioning member configured to separate the light-emitting element and the light-receiving element from each other, and a reflection suppressing member is arranged in a gap formed between the light-transmitting member and a surface of the partitioning member, the reflection suppressing member being thinner than the gap.
FIG. 1A is a schematic front view of a conventional vehicle-mounted display;
FIG. 1B is a schematic side view of the conventional vehicle-mounted display;
FIG. 2 is a diagram schematically illustrating an operational relationship between a slider sensor and a proximity sensor in a conventional input device;
FIG. 3A is a cross-sectional view illustrating structures of a slider sensor and a proximity sensor in a conventional input device;
FIG. 3B is another cross-sectional view illustrating the structures of the slider sensor and the proximity sensor in the conventional input device;
FIG. 4 is a plan view of the proximity sensor illustrated in FIGS. 3A and 3B when a cover panel and the slider sensor are removed from the input device illustrated in FIGS. 3A and 3B;
FIG. 5A is a cross-sectional view illustrating a configuration of the input device as a comparative example;
FIG. 5B is another cross-sectional view illustrating the configuration of the input device as the comparative example;
FIG. 5C is a cross-sectional view illustrating a configuration of an input device according to an embodiment;
FIG. 5D is another cross-sectional view illustrating the configuration of the input device according to an embodiment;
FIG. 6A is a cross-sectional view illustrating a modified example of an input device according to an embodiment;
FIG. 6B is a cross-sectional view illustrating another modified example of an input device according to an embodiment;
FIG. 6C is a cross-sectional view illustrating yet another modified example of an input device according to an embodiment;
FIG. 6D is a cross-sectional view illustrating yet another modified example of an input device according to an embodiment;
FIG. 7 is a cross-sectional view illustrating a configuration of an input device according to an embodiment; and
FIG. 8 is a diagram illustrating an example in which the input device according to an embodiment is applied to a vehicle-mounted display.

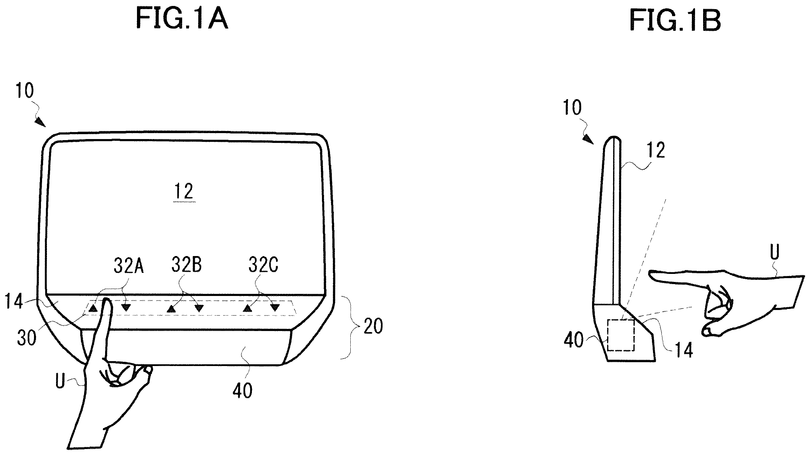

In response to the trend toward enhancing user convenience in input operations, various sensors, in addition to touch sensors, may be provided in the vicinity of a vehicle-mounted display. FIGS. 1A and 1B are schematic diagrams illustrating a configuration of an input device mounted on a conventional vehicle-mounted display. Specifically, FIG. 1A is a front view of the vehicle-mounted display, and FIG. 1B is a side view of the vehicle-mounted display.

An input device 20 is installed in a lower portion 14 of a screen 12 of a vehicle-mounted display 10. The input device 20 includes a slider sensor 30 for detecting a sliding operation of an operation target U, such as a user's finger, and a proximity sensor 40 for detecting proximity of an operation target U.

The slider sensor 30 is a one-dimensional capacitance sensor in which sensors are arranged in a horizontal direction, and is configured to receive inputs of various kinds of information based on different touch positions. For example, seat temperature and audio output level can be adjusted by touching buttons printed on a cover panel disposed on a surface of the lower portion 14, for example, an up/down button pair button 32A for driver seat temperature adjustment, an up/down pair button 32C for passenger seat temperature adjustment, and an up/down pair button 32B for adjustment of the audio output level of an in-vehicle audio device. The proximity sensor 40 adopts an infrared light system, for example, in which infrared LEDs sequentially emit light and corresponding light-receiving elements PD receive reflected light. The proximity sensor 40 detects proximity of an operation target U based on the intensity of the received reflected light, and estimates the movement of the operation target U from a center-of-gravity position of the received reflected light and variations in the amount of received reflected light, thereby enabling determination of a gesture operation.

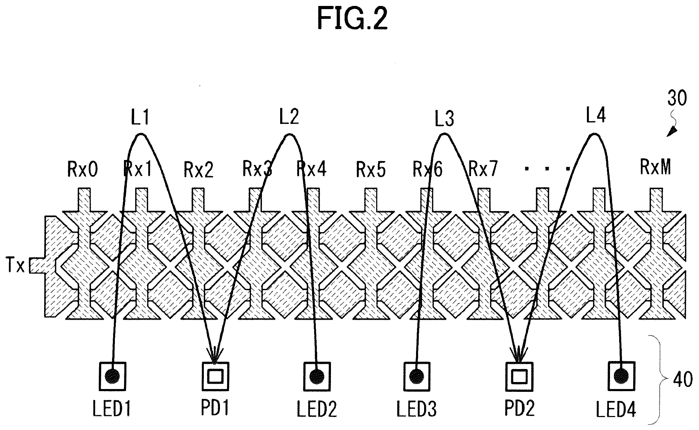

FIG. 2 is a diagram schematically illustrating the operational relationship between the slider sensor 30 and the proximity sensor 40. The slider sensor 30 has a diamond-shaped electrode pattern including a plurality of sensor lines (Rx0, Rx1, ..., RxM) arranged in the X direction and one sensor line Tx intersecting these sensor lines. The electrode pattern is made of, for example, a transparent metal material such as ITO (indium tin oxide). When the sensor line Tx is driven, the electrostatic capacitance of the sensor lines (Rx0, Rx1, ..., RxM) in the X direction is measured, and a touch operation at the intersection of the sensor line Rxi (i = 1, ..., M) in the X direction and the sensor line Tx is detected based on an amount of change in the electrostatic capacitance. For example, when there is a finger touch, the electrostatic capacitance at the touched position decreases and is measured accordingly.

The proximity sensor 40 disposed on the rear side of the slider sensor 30 has, for example, four infrared LEDs LED1, LED2, LED3, and LED4, and two light-receiving elements PD1 and PD2 arranged between adjacent ones of the infrared LEDs. The infrared LEDs LED1 through LED4 are sequentially driven to avoid emission overlaps. The light-receiving element PD1 receives reflected light L1 when the infrared LED LED1 is turned on, and light L2 when the infrared LED LED2 is turned on. The light-receiving element PD2 receives reflected light L3 when the infrared LED LED3 is turned on, and light L4 when the infrared LED LED4 is turned on. These four measurements are operated as one cycle. The infrared light from the infrared LEDs passes through the transparent electrode of the slider sensor 30, and detects proximity of an operation target U that has come into proximity to the slider sensor 30.

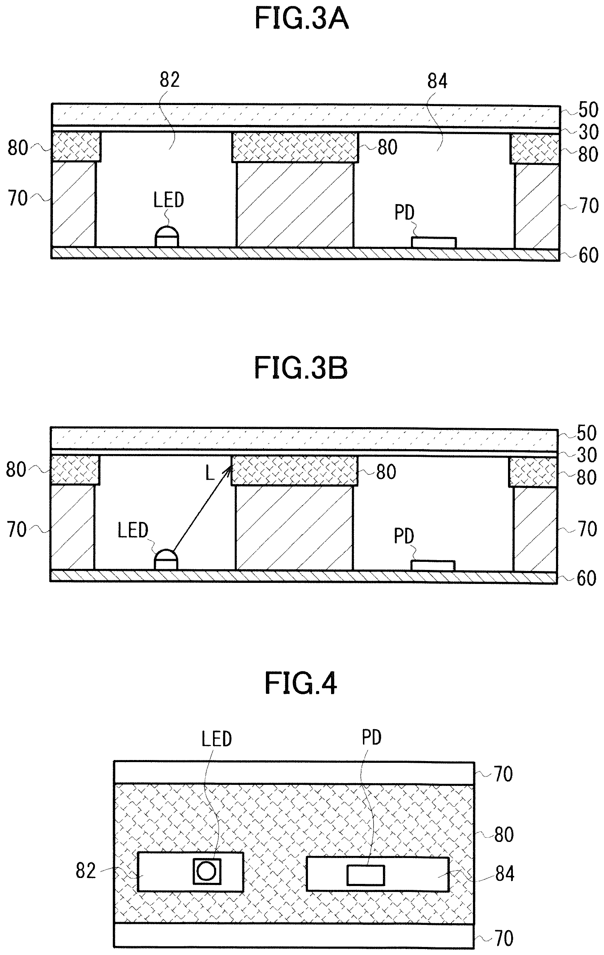

FIGS. 3A and 3B are cross-sectional views illustrating the structures of the slider sensor 30 and the proximity sensor 40, and FIG. 4 is a plan view of the proximity sensor 40 when a cover panel 50 (light-transmitting member) and the slider sensor 30 illustrated in FIGS. 3A and 3B are removed. The slider sensor 30, which is a capacitance type touch sensor, is attached to the back of the cover panel 50 (generally made of plastic) having a thickness of approximately 0.x mm to 1.x mm and serving as a surface on which the user operates. Buttons and icons for increasing and decreasing the temperature of the driver seat, the temperature of the passenger seat, and the audio output level of the in-vehicle audio device are printed on the front surface of the cover panel 50, as described above. Since the slider sensor 30 needs to transmit infrared light, its electrode pattern is made of ITO, metal mesh, or the like. The cover panel 50 uses a material having a property of blocking visible light while transmitting infrared light so that the internal structure is not visible, or ink having such a property is printed on the front surface.

The proximity sensor 40 includes a circuit board 60 disposed on the rear side of the slider sensor 30, and the infrared LEDs and the light-receiving elements PD (e.g., photodiodes) are mounted on the circuit board 60. The infrared light emitted from the infrared LEDs passes through the slider sensor 30 and the cover panel 50 to irradiate an operation target U, and light reflected by the operation target U passes through the cover panel 50 and the slider sensor 30 again to be received by the light-receiving elements PD, thereby detecting proximity of the operation target U.

In the proximity sensor 40 having such a configuration, false detection occurs when infrared light from the infrared LEDs leaks to the light-receiving elements PD even when there is no operation target. Therefore, a holder 70 (partitioning member) as a structure having a light shielding wall for supporting the slider sensor 30 and separating an infrared LED and a light-receiving element PD from each other is provided on the circuit board 60 to block light leakage from the infrared LED to the light-receiving element PD. Furthermore, in a conventional configuration, a cushion material 80 is provided in a gap between the slider sensor 30 and the top of the holder 70 to prevent light L from leaking from the infrared LED through the gap. This state is illustrated in FIG. 3B. As illustrated in FIG. 4, rectangular windows 82 and 84 corresponding to the infrared light LED and the light-receiving element PD are formed in the cushion material 80, and the irradiation direction of the infrared LED and the light receiving direction of the light-receiving element PD are simultaneously controlled by the windows 82 and 84.

However, in the conventional input device, when a change in the degree of collapse of the cushion material 80 due to vibration or a change in the moisture content due to a change in humidity occurs, the relative dielectric constant of the cushion material 80 facing the slider sensor 30 changes. This change alters a change in the capacitance value of the slider sensor that is in contact with the cushion material 80, causing the input device to mistakenly recognize a touch input (so-called ghost touch). In other words, the input device detects a touch as though a sliding operation has been performed on the operation surface of the cover panel 50. If the cushion material 80 is removed as a countermeasure against erroneous touch detection, the detection performance of the operation target by the proximity sensor deteriorates.

An object of the present disclosure is to provide an input device that addresses such conventional problems and suppresses deterioration in the detection performance of an operation target.

According to the present disclosure, by providing a thin reflection-suppressing member in a gap between a light-transmitting member and a partitioning member, leakage light from a light-emitting element passing through the gap is attenuated, thereby preventing deterioration in the detection performance of a proximity sensor. Furthermore, in an input device including a touch sensor, the configuration prevents erroneous touch detection (ghost touch) caused by deformation or changes in the properties of a cushion material that is installed in the gap, as in related art arrangements.

Hereinafter, embodiments of the present disclosure will be described. An input device of the present disclosure includes a touch sensor and a proximity sensor each configured to receive operation inputs from a user. The input device may be mounted on any type of electronic apparatus and may be incorporated in a touch panel display, for example. The touch sensor is an electrostatic capacitance type sensor and detects a touch position or a touch operation by a user. The proximity sensor optically detects the presence or absence of the proximity of an operation target by using, for example, infrared light. A light-emitting element is, for example, a light-emitting diode or a laser diode that emits infrared light, and a light-receiving element is, for example, a photodiode or a phototransistor that receives infrared light. The drawings referred to in the following description of the embodiments include exaggerated representations to facilitate understanding of the invention, and do not represent the shape or scale of an actual product.

### [Examples]

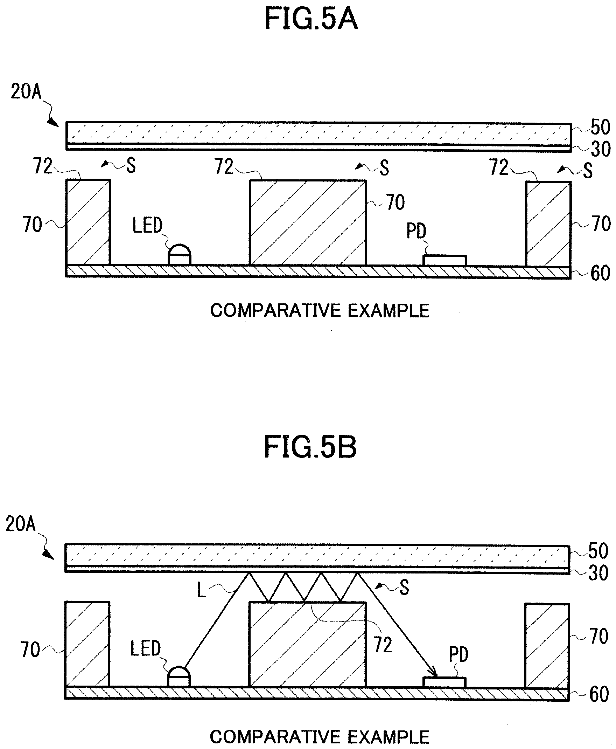

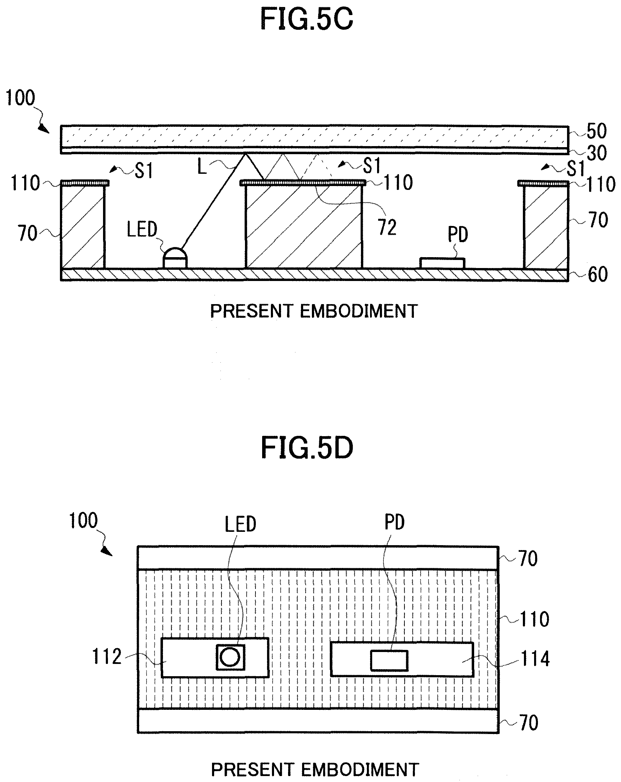

Next, an input device according to a first embodiment of the present disclosure will be described. FIGS. 5A and 5B illustrate a cross-sectional structure of an input device according to a comparative example, and FIG. 5C illustrates a cross-sectional structure of the input device according to the present embodiment. In these input devices, the slider sensor 30 and the proximity sensor 40 are the same as those described in the related art and illustrated in FIGS. 1 through 4, and are given the same reference numerals.

The holder 70 (partitioning member) is a partition wall member, mechanically supports the slider sensor 30 and the cover panel 50 (light-transmitting element), and forms a plurality of internal spaces between the circuit board 60 and the slider sensor 30, and one of the infrared LEDs (light-emitting diodes) or one of the light-receiving elements PD is arranged in each internal space. For example, the holder 70 may be made of a light-shielding material, or an antireflection film or a light-absorbing film may be attached to its surface. The holder 70 blocks light so that the light emitted by the infrared LED does not directly irradiate the adjacent light-receiving element PD.

The cover panel 50 provides an operation surface of the slider sensor 30 and transmits light emitted from the infrared LED. The cover panel 50 may be made of an optical member that substantially prevents transmission of visible light while allowing infrared light to pass therethrough, such that internal optical elements are concealed from view. For example, the cover panel 50 may be made of a material that can transmit infrared light such as polycarbonate, or a reflective film that reflects visible light may be attached to a surface such as glass.

In an input device 20A as a comparative example, as illustrated in FIG. 5A, in order to prevent erroneous detection of the slider sensor 30 resulting from changes in relative permittivity caused by a cushion material, the cushion material is not used in the input device 20A. By omitting a cushion material, erroneous touch detection of the slider sensor 30 due to deformation or changes in material properties can be prevented.

However, omission of a cushioning material creates a gap S between a surface 72 of the holder 70 (i.e., the surface facing the slider sensor 30) and the slider sensor 30, which is previously blocked by a cushioning material in the conventional input device. The gap S forms a light leakage path in which light L emitted from the infrared LED is repeatedly reflected within the gap S and reaches the light-receiving element PD, as illustrated in FIG. 5B. As a result, the light L emitted from the infrared LED is detected by the light-receiving element PD even when there is no proximity of an operation target, and the detection performance of the proximity sensor is hindered.

In an input device 100 of the present embodiment, as illustrated in FIG. 5C, a low-reflection sheet 110 (reflection suppressing member) is attached to the surface 72 of the holder 70 as a member for suppressing reflection of light passing through the gap. The low-reflection sheet 110 suppresses at least the reflectance of an infrared component, that is, a wavelength component used for proximity detection, to a low level, and for example, reduces the reflectance of infrared light to several percent or less. In addition to the low-reflection sheet 110, an anti-reflection sheet or a light absorbing sheet may be used as the member for suppressing reflection, and the anti-reflection sheet or the light absorbing sheet have optical properties equivalent to those of the low-reflection sheet 110.

The surface 72 of the holder 70 provides a substantially flat surface facing the slider sensor 30, and the low-reflection sheet 110 is attached to cover the surface 72. The low-reflection sheet 110 is a sheet-like member that is very thin compared with a cushion material, and when the low-reflection sheet 110 is attached to the surface 72 of the holder 70, a gap S1 is created between the low-reflection sheet 110 and the slider sensor 30. The creation of the gap S1 eliminates the occurrence of erroneous touch detection that may occur when the cushion material is in contact with the slider sensor 30. The leakage light L passing through the gap S1 is attenuated by repeated reflections at the gap S1 between the slider sensor 30 and the low-reflection sheet 110, and the leakage light L can be attenuated to a level that is not detected by the light-receiving element PD.

The planar shape of the low-reflection sheet 110 is preferably a size that covers the entire surface 72 of the holder 70, but is not necessarily limited to this. As long as the leakage light L attenuated by repeated reflections is at a level that is not substantially detected by the light-receiving element PD, the size of the low-reflection sheet 110 may be smaller than the surface 72 of the holder 70 or larger than the surface 72. In one aspect, as illustrated in FIG. 5D, a rectangular window 112 for controlling the irradiation direction of the infrared LED and a rectangular window 114 for controlling the light-receiving direction of the light-receiving element PD are formed on the low-reflection sheet 110, in a manner similar to that of a conventional configuration employing a cushion material.

By adhering the low-reflection sheet 110 to the surface 72 of the holder 70 in this manner, it is possible to prevent leakage light from the infrared LED passing through the gap S1 to the light-receiving element PD, in a manner similar to that of a conventional configuration employing a cushion material. Since the low-reflection sheet 110 is thinner than the cushion material and does not touch the slider sensor 30, the low-reflection sheet 110 does not cause erroneous touch detection. Thus, in the input device 100 of the present embodiment, erroneous touch detection of the slider sensor 30 can be prevented while maintaining the proximity detection performance of the proximity sensor 40.

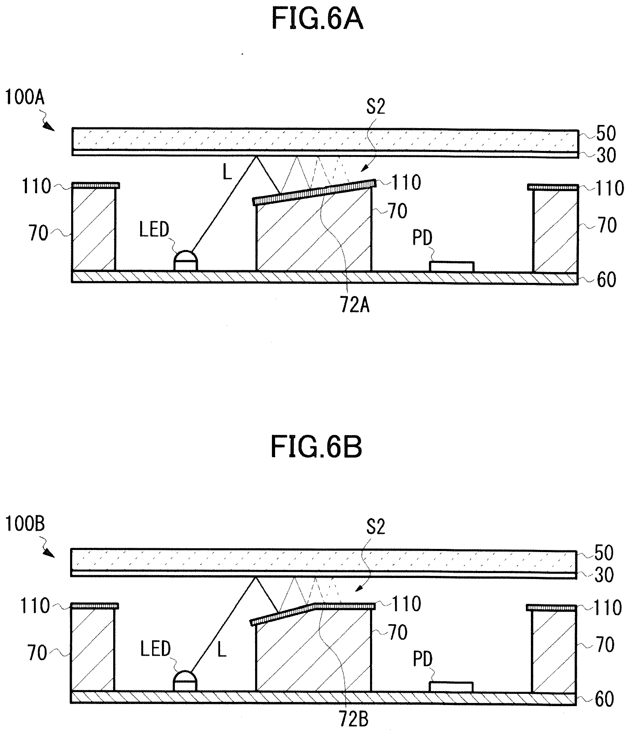

Next, a modified example of the present embodiment will be described with reference to FIGS. 6A through 6D. In an input device 100A illustrated in FIG. 6A, the low-reflection sheet 110 is attached to a surface 72A of the holder 70, and the surface 72A is inclined in such a manner that the side on which the infrared LED is located is lower than the side on which the light-receiving element PD is located. In other words, a gap S2 gradually becomes narrower from the infrared LED side toward the light-receiving element PD side. Since the gap S2 gradually becomes narrower, the angle at which light is reflected by the surface of the low-reflection sheet 110 becomes steeper. This configuration provides the following two effects in reducing leakage light: (1) an enhanced attenuation effect of the low-reflection sheet 110 due to an increased number of times of reflections of the leakage light L traveling from the infrared LED to the light-receiving element PD along the optical path; and (2) an increased amount of light transmitted through the cover panel 50, that is, a reduced amount of light reflected by the surface of the cover panel 50.

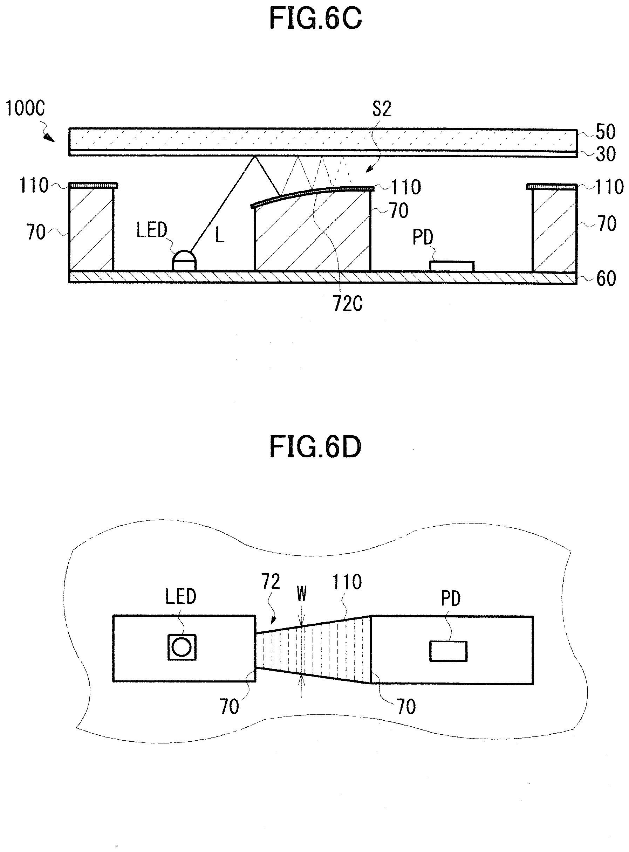

Other than the surface 72A of the holder 70 being inclined in a straight line, the same effect can be achieved by using a surface 72B inclined only up to a partial point as illustrated in FIG. 6B, a surface 72B inclined in a stepwise manner at different angles, or a surface 72C formed into a curved shape as illustrated in FIG. 6C. The surface 72 of the holder 70 may be inclined in such a manner that the gap S2 gradually increases from the side on which the infrared LED is located toward the side on which the light-receiving element PD is located.

The width of the low-reflection sheet 110 may be changed so as to increase toward the light-receiving element PD or the infrared LED. For example, as illustrated in FIG. 6D, when the low-reflection sheet 110 is viewed from directly above, it is shaped like a trapezoid with the upper end facing the infrared LED side and the lower end facing the light-receiving element PD, and the width W is changed toward the light-receiving element PD, thereby changing the area of the reflection surface by the low-reflection sheet 110 and attenuating leakage light. The width of the low-reflection sheet 110 may be changed so as to become smaller toward the light-receiving element PD, and for example, the direction of the trapezoid may be opposite to that of FIG. 6D. In this case, the shape of the surface 72 of the underlying holder 70 is arbitrary and not necessarily trapezoid.

In the above modified examples, the surfaces 72A, 72B, and 72C of the holder 70 are inclined in order to narrow the gap S2 toward the light-receiving element PD, but instead of this, the gap S2 may be narrowed by adhering a low-reflection sheet whose film thickness becomes larger toward the light-receiving element PD to the surface of the holder 70. Conversely, the gap S2 may be increased by adhering a low-reflection sheet whose film thickness becomes smaller toward the light-receiving element PD from the infrared LED to the surface of the holder 70. In these cases, the surface may be flat or inclined.

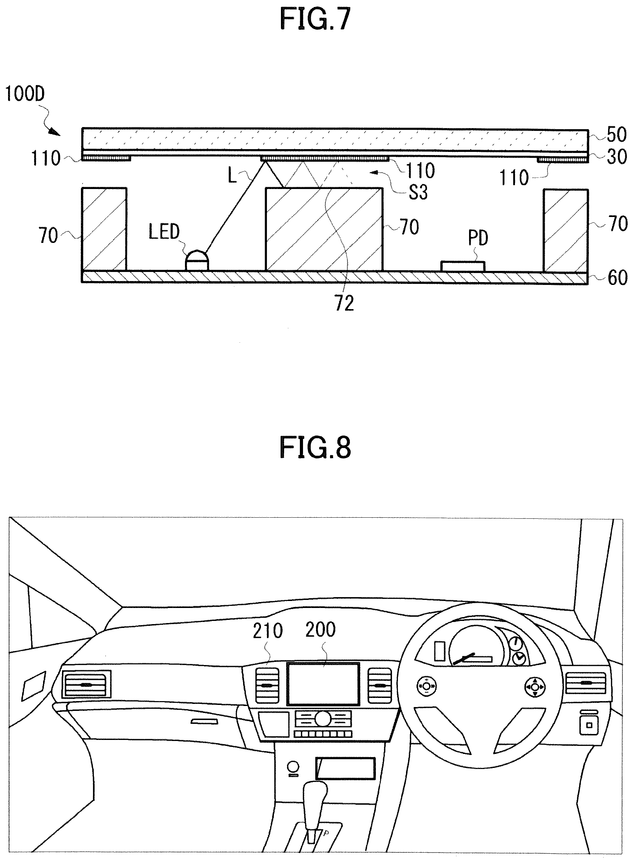

Next, a second embodiment of the present disclosure will be described. FIG. 7 is a cross-sectional view illustrating a configuration of an input device according to the second embodiment. As illustrated in FIG. 8, in an input device 100D of the present embodiment, the low-reflection sheet 110 is not attached to the surface 72 of the holder 70, but is attached to the back surface of the slider sensor 30 or the cover panel 50 facing the surface 72 of the holder 70. The planar shape of the low-reflection sheet 110 is, for example, approximately the same size as the surface 72 of the holder 70. In this case as well, leakage light from the infrared LED to the light-receiving element PD is attenuated through repeated reflections within a gap S3. The low-reflection sheet 110 does not affect the change in capacitance of the slider sensor 30.

FIG. 8 illustrates an example in which the input device of the present embodiment is installed in an in-vehicle display. A touch panel type display 200 is arranged in a center console 210 located at the center of the instrument panel in front of the driver and the passenger. The input device for detecting a gesture operation or a touch operation by the driver or the passenger is mounted on the display 200.

A proximity sensor of the input device emits infrared light to the front surface of the display 200, and when an operation target of the user approaches the front surface of the display 200, receives the light reflected by the operation target, and detects the proximity of the operation target. A slider sensor of the input device detects a touch position of the operation target to the up and down buttons, icons, and the like printed on the cover panel 50 for adjustment of the driver's seat temperature, the passenger's seat temperature, and the audio output level of an in-vehicle audio device. The results detected by the proximity sensor and the slider sensor are provided to a controller (not illustrated), and the controller determines the operation input of the user based on these detection results and controls the next operation.

In the forgoing embodiments, the proximity sensor of the input device is provided with four light-emitting elements and two light-receiving elements, but this is only an example, and the number and arrangement of the light-emitting elements and the light-receiving elements used in the proximity sensor are freely chosen. The proximity sensor uses infrared light, but this is only an example, and light of another wavelength may be used. In this case, the cover panel is made of a material capable of transmitting at least the wavelength of light from the light-emitting elements.

In the foregoing embodiments, the input device includes a capacitive touch sensor, but the input device of the present disclosure may not necessarily include a touch sensor. In other words, the input device detects proximity of an operation target through a light-transmitting member capable of transmitting light from the light-emitting elements, and an electrode pattern for the touch sensor is not attached to the back surface of the light-transmitting member. Furthermore, in the foregoing embodiments, a slider sensor is exemplified as a capacitive touch sensor of the input device, but this is only an example, and the capacitive touch sensor is not necessarily limited to a sensor arranged in a one-dimensional direction, but may be a sensor arranged in a two-dimensional direction. In this case, the touch sensor can detect a touch position or a movement such as a swipe of an operation target in a two-dimensional direction.

Although embodiments of the present disclosure have been described in detail above, the present disclosure is not limited to specific embodiments, and various alterations and changes are possible within the scope of the appended claims.

## Claims

1. An input device comprising a light-transmitting member configured to transmit light and a proximity sensor configured to detect proximity of an operation target through the light-transmitting member, wherein
the proximity sensor includes
a light-emitting element;
a light-receiving element; and
a partitioning member configured to separate the light-emitting element and the light-receiving element from each other, and
a reflection suppressing member is arranged in a gap formed between the light-transmitting member and a surface of the partitioning member, the reflection suppressing member being thinner than the gap.

2. The input device according to claim 1, wherein
the reflection suppressing member is disposed on the surface of the partitioning member that faces the light-transmitting member.

3. The input device according to claim 1 or 2, wherein
the surface of the partitioning member is inclined in such a manner that the gap is narrowed toward one of a side on which the light-receiving element is located or a side on which the light-emitting element is located.

4. The input device according to one of claims 1 to 3, wherein
a thickness of the reflection suppressing member is increased in such a manner that the gap is narrowed toward one of a side on which the light-receiving element is located or a side on which the light-emitting element is located.

5. The input device according to one of claims 1 to 4, wherein
a width of the reflection suppressing member when viewed from right above is increased toward one of a side on which the light-receiving element is located or a side on which the light-emitting element is located.

6. The input device according to one of claims 1 to 5, wherein
the reflection suppressing member is disposed on a surface of the light-transmitting member that faces the partitioning member.

7. The input device according to one of claims 1 to 6, wherein
the reflection suppressing member is configured to suppress at least the reflectance of a wavelength of light emitted from the light-emitting element.

8. The input device according to one of claims 1 to 7, wherein
the reflection suppressing member is a low-reflection sheet.

9. The input device according to one of claims 1 to 8, further comprising:
a touch sensor configured to detect a touch by the operation target to the light-transmitting member.

10. The input device according to claim 9, wherein
the touch sensor and the proximity sensor are mounted on a display.
